Europäisches Patentamt

(19) European Patent Office

Office européen des brevets

(11) Publication number: **0 034 222**
**A1**

(12) # EUROPEAN PATENT APPLICATION

(21) Application number: 80200100.8

(22) Date of filing: 06.02.80

(51) Int. Cl.³: **A 23 J 1/00**
**A 23 J 1/06**

(43) Date of publication of application:
26.08.81 Bulletin 81 34

(84) Designated Contracting States:
AT BE CH DE FR IT LU NL SE

(71) Applicant: **SHELL INTERNATIONALE RESEARCH MAATSCHAPPIJ B.V.**
**Carel van Bylandtlaan 30**
**NL-2596 HR DEN HAAG(NL)**

(72) Inventor: **Williamson, George Ralph**

**Deceased(GB)**

(74) Representative: **Keuzenkamp, Abraham et al,**
**c/o Shell Internationale Research Maatschappij B.V. P.O.**
**Box 302**
**NL-2501 CH 's-Gravenhage(NL)**

(54) Process for the removal of protein from waste water and precipitate recovered by this process.

(57) A process for the removal of protein from waste water, which comprises adding to the waste water a water-soluble carboxymethyl cellulose, which in 1% by weight solution in water at 25°C has a viscosity determined in a Brookfield viscometer from 25 to 900 centipoise, and removing the precipitate formed.

EP 0 034 222 A1

1

# PROCESS FOR THE REMOVAL OF PROTEIN FROM
# WASTE WATER AND PRECIPITATE RECOVERED BY
# THIS PROCESS

The invention relates to a process for the removal of protein from waste water and to precipitate recovered by this process.

Valuable proteins are discharged to waste in many industrial effluent waste water streams. These arise mainly from washings of machinery and floors in animal slaughter houses, poultry and meat processing combines, the fish and milk product industries. It is attractive to reclaim these proteins from the effluent waste water streams because they are very suitable to be used as animal food. Moreover, by removing protein from these effluent streams environmental pollution is reduced.

The invention relates to a process in which the protein in waste water is removed to a very high extent by precipitation.

According to the invention there is provided a process for the removal of protein from waste water, which comprises adding to the waste water a water-soluble carboxymethyl cellulose, which in 1% by weight solution in water at $25^{\circ}C$ has a viscosity determined in a Brookfield viscometer from 25 to 900 centipoise, and removing the precipitate formed. Very suitably the protein is of animal origin, although the process according to the invention may also be used for removal of protein of vegetable origin from waste water.

The pH during the process is of great importance, in that the amount of protein precipitated (expressed as a percentage of the total amount present) is very dependent on the pH. The pH at which the percentage of protein removed is optimal, can easily be determined in laboratory scale experiments for each type of protein-containing waste water. In general a pH from 4-6 will be very suitable.

2

Very good results are obtained with carboxymethyl celluloses which in 1% by weight solution in water at 25°C have a viscosity determined in a Brookfield viscometer from 40 to 400 centipoise. The amount of carboxymethyl cellulose to be used in relation to the amount of protein present in the waste water may vary between wide limits, amounts of 5-15%w of carboxymethyl cellulose on total protein present are very suitable. In each case the optimum amount of carboxymethyl cellulose needed may very conveniently be determined in laboratory experiments.

The precipitate form, which comprises protein and carboxymethyl cellulose, may be removed from the waste water by any suitable method, e.g., by filtration or centrifugation.

The precipitate obtained is very suitable to be used as animal feed, because it does not contain any materials which form a bar to such use on toxicological grounds.

EXAMPLE

A 1% w/v solution of blood protein was prepared by dissolving dried animal blood in water.

Several carboxymethyl celluloses were added in aqueous solution to the blood protein solution, and for each of them the dosage at which maximum protein precipitation achieved occurred was determined at pH 5. The Table shows the maximum protein precipitation achieved with each carboxymethyl cellulose (calculated on total protein present) needed.

Experiments 2-6 are according to the invention, Experiment 1 is a comparative experiment showing a low yield of precipitated protein when a carboxymethyl cellulose with low viscosity is used.

3

TABLE

| Ex-periment No. | Viscosity $(C_p)$ of carboxy-methyl cellulose | Percentage carboxy-methyl cellulose on protein | Maximum percentage protein precipitated |
|---|---|---|---|
| 1 | 20 | 12 | 82 |
| 2 | 40 | 12 | 88 |
| 3 | 60 | 10 | 89 |
| 4 | 100 | 12 | 90 |
| 5 | 350 | 12 | 88.5 |
| 6 | 800 | 12 | 85 |

4

# C L A I M S

1. A process for the removal of protein from waste water, which comprises adding to the waste water a water-soluble carboxymethyl cellulose, which in 1% by weight solution in water at 25°C has a viscosity determined in a Brookfield viscometer from 25 to 900 centipoise, and removing the precipitate formed.

2. A process according to claim 1, in which the pH during the process is from 4 - 6.

3. A process according to any one of the preceding claims, in which the water-soluble carboxymethyl cellulose has a viscosity in 1% by weight solution in water at 25°C in a Brookfield viscometer from 40 to 400 centipoise.

4. A process according to any one of the preceding claims, in which the amount of carboxymethyl cellulose added is 5-15%w on total protein present.

5. A precipitate obtained according to any one of the preceding claims.

0034222

| DOCUMENTS CONSIDERED TO BE RELEVANT | | | CLASSIFICATION OF THE APPLICATION (Int. Cl.³) |
|---|---|---|---|
| Category | Citation of document with indication, where appropriate, of relevant passages | Relevant to claim | |
| | JOURNAL OF DAIRY SCIENCE, vol. 54, no. 9, September 1971, pages 1270-1274, Champaign Illinois U.S.A. J. HIDALGO et al.: "Selective Precipitation of whey proteins with carboxymethylcellulose" <br><br> * Page 1270, column 2: "Experimental Procedures" - page 127, column 1, paragraph 2 * <br><br> -- | 1,2,5 | A 23 J 1/00 <br> 1/06 |
| | FR - A - 2 262 549 (TASMAN VACCINE LABORATORY LTD.) <br><br> * Page 4, lines 15-24; page 5, line 34 - page 6, line 20 * <br><br> -- | 1,2,5 | **TECHNICAL FIELDS SEARCHED (Int. Cl.³)** <br><br> A 23 J 1/00 <br> 1/06 <br> 1/20 |
| | CHEMICAL ABSTRACTS, vol. 89, no. 19, 6th November 1978, page 431, column 1, no. 161710j Columbus, Ohio, U.S.A. A.P. IMESON et al.: "Protein recovery from blood plasma by precipitation with polyuronates" <br><br> & J. FOOD TECHNOL. 1978, 13(4), 329-38 <br><br> * Abstract * <br><br> -- | 1,5 | |
| | US - A - 3 842 062 (E.F. EASTMAN) <br><br> * Column 2, lines 60-70; example 1 * <br><br> ---- | 1,5 | |

**CATEGORY OF CITED DOCUMENTS**

X: particularly relevant
A: technological background
O: non-written disclosure
P: intermediate document
T: theory or principle underlying the invention
E: conflicting application
D: document cited in the application.
L: citation for other reasons

&: member of the same patent family, corresponding document

The present search report has been drawn up for all claims

| Place of search | Date of completion of the search | Examiner |
|---|---|---|
| The Hague | 03-10-1980 | SCHUERMANS |

EPO Form 1503.1  06.78